**Europäisches Patentamt**

**European Patent Office**

**Office européen des brevets**

(19)

(11) Veröffentlichungsnummer: **0 185 035**
**B1**

(12) **EUROPÄISCHE PATENTSCHRIFT**

(45) Veröffentlichungstag der Patentschrift: **30.01.91**

(51) Int. Cl.⁵: **H 01 S 3/02, H 01 S 3/213**

(21) Anmeldenummer: **85902463.0**

(22) Anmeldetag: **20.05.85**

(86) Internationale Anmeldenummer:
**PCT/DE85/00170**

(87) Internationale Veröffentlichungsnummer:
**WO 85/05503 05.12.85 Gazette 85/26**

(54) **FARBSTOFFLASER.**

(30) Priorität: **18.05.84 DE 3418629**

(43) Veröffentlichungstag der Anmeldung:
**25.06.86 Patentblatt 86/26**

(45) Bekanntmachung des Hinweises auf die
Patenterteilung:
**30.01.91 Patentblatt 91/05**

(84) Benannte Vertragsstaaten:
**AT BE CH DE FR GB IT LI LU NL SE**

(56) Entgegenhaltungen:
**EP-A-0 026 093**
**DE-A-2 408 808**
**FR-A-2 243 426**
**US-A-3 826 577**

**PATENT ABSTRACTS OF JAPAN, Band 5, Nr.**
**101 (M-76) (773), 30. Juni 1981 & JP-A-5644665**

(73) Patentinhaber: **AESCULAP AG**
**Möhringer Strasse 125**
**D-7200 Tuttlingen (DE)**

(72) Erfinder: **SCHRÖDER, Eckhard**
**Sachsstr. 9**
**D-8501 Eckental (DE)**
Erfinder: **WOESTE, Dr. Ludger**
**Ecole Polytechnique Fédérale de Lausanne (CAL)**
**CH - 1015 Lausanne - Ecublens (CH)**

(74) Vertreter: **Hoeger, Stellrecht & Partner**
**Uhlandstrasse 14 c**
**D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 185 035 B1

## Beschreibung

Die Erfindung bezieht sich auf einen Farbstofflaser gemäß dem Oberbegriff des Patentanspruchs, wie er aus der DE—A—24 08 808 bekannt ist.

Bei einem Farbstofflaser gemäß dem Oberbegriff des Patentanspruchs wird der Farbstoff von einer Pumpe aus einem Vorratsgefäß angesaugt und tritt über eine Düse als sog. Jet aus. Auf den Jet ist der Laserstrahl eines weiteren Lasers, des sog. Pumplasers gerichtet, der den Laservorgang beim Farbstoff auslöst.

Aufgrund einer Vielzahl von Ursachen, beispielsweise aufgrund von lokalen Dichteschwankungen des Farbstoffs kann es vorkommen, daß der Pumplaserstrahl den Farbstoff im Jet verdampft. Der verdampfte Farbstoff schlägt sich auf den Bauteilen im Laser, z.B. auf den Laserspiegeln etc. nieder. Dieser Niederschlag muß bei den bekannten Farbstofflasern von Zeit zu Zeit entfernt werden, da er den Betrieb des Farbstofflaser stört.

Diese periodisch erforderlichen Reinigungsvorgänge können bei einem als Labormodell eingesetzten Farbstofflaser noch toleriert werden, nicht jedoch bei einem kommerziell beispielsweise in einem Augenbehandlungsgerät verwendeten Farbstofflaser.

Der Erfindung liegt die Aufgabe zugrunde, einen Farbstofflaser gemäß dem Oberbegriff des Patentanspruchs derart auszugestalten, daß die Serviceintervalle aufgrund von Verschmutzung des Lasers durch Farbstoffniederschläge bei vertretbarem Aufwand verlängert werden.

Eine erfindungsgemäße Lösung dieser Aufgabe ist im Patentansprüche gekennzeichnet.

Erfindungsgemäß ist erkannt worden, daß die einfachste Lösung der gestellten Aufgabe nicht darin besteht, den Laser so auszugestalten, daß kurzzeitige Verdampfungsvorgänge des Farbstoffs im Jet mit Sicherheit vermieden werden. Wesentlich weniger Aufwand erfordert es vielmehr, den Laser so weiterzubilden, daß verhindert wird, daß sich eventuell entstehender Farbstoffdampf im Inneren des Lasers, beispielsweise auf den Spiegeln niederschlägt. Hierzu wird an die Auffangleitung eine Unterdruckeinrichtung angeschlossen, die in der Auffangleitung einen geringfügigen Unterdruck erzeugt. Durch diesen Unterdruck in der Auffangleitung wird im Bereich des Jets eine Strömung hervorgerufen, die eventuell entstehenden Farbstoffdampf in die Auffangsleitung "mitreißt".

Dabei erhält man einen besonders einfachen Aufbau des Lasers dadurch, daß man als Unterdruckeinrichtung eine Venturidüse verwendet, die an einem Lüfter oder eine Pumpe angeordnet ist und über eine Unterdruckleitung mit der Auffangleitung verbunden ist. Hierdurch beschränkt sich der zusätzliche Aufwand auf eine vergleichsweise einfach herzustellende Düse und eine Leitung, da praktisch in jedem Farbstofflaser ein Lüfter beispielsweise für die Stromversorgungseinheit etc. vorhanden ist.

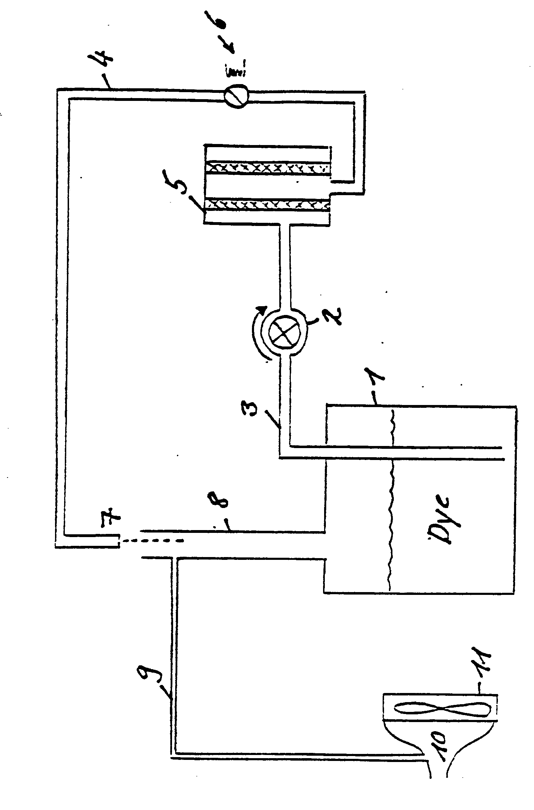

Die Erfindung wird nachstehend anhand eines Ausführungsbeispiels unter Bezugnahme auf die Zeichnung näher beschrieben, deren einzige Figur schematisch den Farbstoffkreislauf eines erfindungsgemäßen Farbstofflasers zeigt.

Der Farbstoff (Dye) befindet sich in einem Vorratsgefäß 1. Eine Pumpe 2 saugt über eine Leitung 3 den Farbstoff aus dem Vorratsbehälter 1 an und pumpt ihn über eine Leitung 4, ein Filter 5 und ein Magnetventil 6, mit dem der Farbstoffkreislauf im Außerbetriebszustand abgesperrt werden kann, zu einer Düse 7, aus der der Farbstoff als sogenannter Jet austritt. Auf den Jet ist der Strahl eines nicht dargestellten Pumplasers gerichtet, durch den der Farbstoff zum "Lasern" angeregt wird.

Der Farbstoff fließt aus dem Jetbereich in eine darunter angeordnete Auffangleitung 8, durch die er zu dem Vorratsbehälter 1 zurückfließt.

Mit der Auffangleitung 8 ist über eine Unterdruckleitung 9 der Ansaugbereich 10 eines Lüfters 11 verbunden. Der Lüfter 11 ist ein im Farbstofflaser zu anderen Zwecken, beispielsweise zur Kühlung eines Spannungsversorgungsgeräts eingesetzter Lüfter, wie er praktisch in jedem Farbstofflaser vorhanden ist.

Der Ansaugbereich 10 des Lüfters 11 kann dabei in Art einer Venturidüse ausgebildet sein. In jedem Falle wird durch die Verbindung der Auffangleitung 8 mit dem Lüfter 11 in der Auffangleitung 8 ein gewisser Unterdruck erzeugt, durch den eine Strömung im Bereich des Jets entsteht, die eventuell durch den Pumplaserstrahl gebildeten Farbstoffdampf in die Auffangleitung 8 "reißt". Hierdurch wird verhindert, daß sich Farbstoff beispielsweise auf nicht dargestellten Elementen des Farbstofflasers, wie beispielsweise Laserspiegeln niederschlägt.

Für die Unterdruckeinrichtung werden bereits vorhandene Teile des Farbstofflasers mitverwendet, Lüfter oder Pumpen. Dabei kann natürlich der Lüfter über beliebig ausgestaltete Unterdruckleitungen und Düsen im Lüfterbereich Unterdruck in der Auffangleitung erzeugen.

Auch können in dem Bereich, in dem der Farbstoff verdampfen kann, gekühlte Flächen etc. vorgesehen werden, auf denen der Farbstoffampf kondensiert, und in das Rückführungs-Leitungssystem läuft.

## Patentanspruch

Farbstofflaser, bei dem der Farbstoff über eine Düse (7) als sogenannter Jet in den Strahlengang eines Pumplasers austritt, und von dort über eine Auffangleitung (8) zu einem Vorratsgefäß (1) zurückfließt, dadurch gekennzeichnet, daß eine Unterdruckeinrichtung (9, 10) in der Auffangleitung (8) Unterdruck erzeugt, durch den der Farbstoff sowie eventuell entstehender Farbstoffdampf in die Auffangleitung (8) gesaugt wird, und daß die Unterdruckeinrichtung aus einer über eine Unterdruckleitung (9) mit der Auffangleitung (8) verbundenen Venturidüse (10) besteht, die an der Ansaugseite eines in einem Gehäuse des Farbstofflasers vorhandenen Lüfters (11) oder einer vorhandenen Pumpe angeordnet ist.

## Revendication

Laser à colorants dans lequel le colorant sort par une buse (7) sous une forme appelèe jet libre, dans la marche du faisceau d'un laser de pompage et reflue alors par une conduite collectrice (8) dans une cuve (1), caractérisé en ce qu'un dispositif à dépression (9, 10) crée dans la conduite collectrice (8) une dépression qui aspire le colorant ainsi que la vapeur de colorant éventuellement formée dans la conduite collectrice (8) et en ce que le dispositif à dépression comprend un tube de Venturi (10) relié par un conduite à dépression (9) à la conduite collectrice (8) et disposé du côté aspiration d'un ventilateur (11) présent dans un boîtier du laser à colorants ou d'une pompe présente.

## Claim

A dye laser in which the dye is emitted as a jet via a nozzle (7) into the path of the beam of a pump laser, and from there flows back to a supply vessel (1) via a collecting pipe (8), characterised in that a pressure-reducing device (9, 10) creates reduced pressure in the collecting pipe (8), by means of which reduced pressure the dye and any dye vapour which may arise is sucked into the collecting pipe (8), and in that the pressure-reducing device comprises a Venturi nozzle (10) which is connected to the collecting pipe (8) via a reduced pressure pipe (9), the Venturi nozzle (10) being arranged on the suction side of a ventilator (11) existing in a housing of the dye laser, or of an existing pump.